# EUROPÄISCHE PATENTSCHRIFT

(11) **EP 2 173 593 B1**
(45) Veröffentlichungstag und Bekanntmachung des Hinweises auf die Patenterteilung: **15.08.2012**
(21) Anmeldenummer: 08758703.6
(22) Anmeldetag: 23.05.2008
(51) Int. Cl.: B60K 5/02, B60K 17/356, B60W 20/00, B60K 6/52, B60K 6/20, B60W 10/06, B60W 10/08, B60K 6/38, B60K 6/40, B60K 6/48, B60K 6/44, B60K 6/442, B60K 1/02

(54) **HYBRIDFAHRZEUG**
HYBRID VEHICLE
VÉHICULE HYBRIDE

(30) Priorität: 06.07.2007 DE 102007031605
(43) Veröffentlichungstag der Anmeldung: 14.04.2010
(73) Patentinhaber: Dr. Ing. h.c. F. Porsche AG, 70435 Stuttgart (DE)
(72) Erfinder: FÜCHTNER, Martin, 70197 Stuttgart (DE); KRAXNER, Dieter, 71665 Vaihingen an der Enz (DE)
(86) Internationale Anmeldenummer: PCT/EP2008/004104
(87) Internationale Veröffentlichungsnummer: WO 2009/006967

(56) Entgegenhaltungen:
- EP-A- 0 224 144
- EP-A- 1 296 440
- WO-A-02/072375
- AT-U1- 6 377
- GB-A- 2 324 772
- US-A1- 2005 060 076

## Beschreibung

Die vorliegende Erfindung betrifft ein Hybridfahrzeug mit zumindest einer Elektromaschine, wobei die Elektromaschine während einer Antriebsphase als zumindest zusätzlicher Antrieb zu einem Verbrennungsmotor vorgesehen ist.

Üblicherweise werden Hybridfahrzeuge mit einem Verbrennungsmotor und einer Elektromaschine ausgerüstet, wobei der Verbrennungsmotor entweder nur einen elektrischen Energiespeicher wie z.B. eine Fahrzeugbatterie laden kann (serieller Hybrid) oder mechanisch mit einer Antriebswelle gekoppelt ist (paralleler Hybrid) oder beides. Um dabei den Kraftstoffverbrauch bzw. den Energieverbrauch des Hybridfahrzeugs senken zu können, wird die Elektromaschine beim Abbremsen des Fahrzeugs als Generator verwendet und damit der elektrische Energiespeicher aufgeladen. Die Elektromaschine wirkt somit als elektromotorische Bremse und rekuperiert Energie. Darüber hinaus können dadurch die Bremsbeläge des Hybridfahrzeugs geschont werden, wodurch ein verschleißbedingter Austausch und damit Wartungskosten reduziert werden können. Zusätzlich oder alternativ dazu ist ein zumindest zusätzlicher Betrieb der Elektromaschine als Motor vorgesehen. Dadurch ist, zusätzlich zum Antrieb des Hybridfahrzeugs durch den Verbrennungsmotor, ein zusätzlicher elektrischer Antrieb (Boosten) möglich. Weiterhin kann ein ausschließlich elektrisches Fahren mit der Elektromaschine vorgesehen sein, beispielsweise bei Kurzstrecken mit Emissionsbeschränkungen.

Die EP 0 224 144 A1 zeigt ein Fahrzeug, das eine in herkömmlicher Weise durch Verbrennungsmotor antreibbare Hauptantriebsachse besitzt. Bei erhöhtem Schlupf der Räder der Hauptantriebsachse können die Räder einer zuschaltbaren Antriebsachse mittels eines gesonderten Zusatzantriebsaggregates, insbesondere eines Elektromotors, automatisch angetrieben werden. Bei höheren Geschwindigkeiten bleibt der Zusatzantrieb ständig ausgeschaltet bzw. ausgekuppelt

Die Gattungsbildende GB 2 324 772 A offenbart eine Antriebseinheit für ein Hybridfahrzeug die eine Brennkraftmaschine mit innerer Verbrennung, ein mit der Brennkraftmaschine über eine Kupplung kuppelbares Getriebe, ein primäres Differential zum Verteilen der vom Getriebe gespeisten Antriebsleistung auf erste angetriebene Räder, eine mit dem primären Differential verbundene Transfereinheit zum Abzweigen eines Teils der vom Getriebe zum primären Differential übertragenen Leistung, und ein Paar axial aufeinanderfolgende Antriebswellenteile zum Übertragen des abgezweigten Teils der Antriebsleistung von der Transfereinheit zu einem sekundären Differential umfasst, wobei die Antriebswellenteile durch axiales Unterteilen einer Antriebswelle gebildet sind, einen Elektromotor zwischen diesen Antriebswellenteilen und ein Paar Kupplungen, von denen jede den Elektromotor mit einem der beiden Antriebswellenteile verbinden kann.

Die AT 006 377 U1 schlägt ein Allradfahrzeug mit Hybridantrieb vor, das eine Verbrennungskraftmaschine, einen ersten Antriebsstrang zu einer ersten angetriebenen Achse, einen zweiten Antriebsstrang zu einer zweiten angetriebenen Achse, eine elektrische Maschine im zweiten Antriebsstrang, und eine erste vor sowie eine zweite Kupplung nach der elektrischen Maschine hat. Dabei besteht die elektrische Maschine aus einem Stator und aus einem Rotor, der mit einem ersten Glied eines dreigliedrigen Planetengetriebes verbunden ist, dessen zweites und dessen drittes Glied mit der ersten und mit der zweiten Kupplung verbunden ist

Die US 2005/060076 A1 beschreibt ein Hybridfahrzeug mit einer oder mehr Drehmomentquellen für auf verschiedenen Ebenen lösbare Drehmomentanforderungen.

Insbesondere zum rein elektrischen Fahren, aber auch zum Rekuperieren einer entsprechenden Menge an elektrischer Energie und zum hinreichenden Boosten, ist eine ausreichend dimensionierte Elektromaschine notwendig. Diese Elektromaschine benötigt jedoch entsprechenden Bauraum, erhöht das Gewicht des Fahrzeugs und beeinflusst mithin auch dessen Fahrdynamik.

Die Aufgabe der Erfindung besteht darin, hier Abhilfe zu schaffen.

Gelöst wird diese Aufgabe durch die Merkmale des Patentanspruchs 1. Die Unteransprüche beschreiben vorteilhafte Aus- und Weiterbildungen der Erfindung.

Indem bei einem Hybridfahrzeug mit einem heckseitigen Verbrennungsmotor, einem elektrischen Energiespeicher und zumindest einer Elektromaschine, wobei der Verbrennungsmotor die Hinterachse antreibt, die zumeist voluminöse und schwere Elektromaschine beabstandet von der Hinterachse im Bereich der Vorderachse vorgesehen ist, ergeben sich eine Vielzahl von Vorteilen. So resultiert hieraus eine ausgeglichenere Gewichtsverteilung des Hybridfahrzeugs, in dem die schwere Elektromaschine nicht zusätzlich das auf der Hinterachse lastende Gewicht von Verbrennungsmotor und Getriebe verstärkt. Des Weiteren wird zusätzlicher Bauraum erschlossen und der bereits durch den Verbrennungsmotor und das Getriebe stark beanspruchte Bauraum im Bereich der Hinterachse muss nicht noch zusätzlich die voluminöse Elektromaschine aufnehmen. Die jeweilige Anordnung einer Elektromaschine ist somit individuell zur Optimierung der Fahrdynamik bzw. der Bauraum-Ausnutzung des Hybridfahrzeugs wählbar. Zusätzlich wird durch die Erfindung die Grundlage für einen modularen Vierradantrieb des Hybridfahrzeugs geschaffen, indem ein zumindest elektrischer Antrieb der Vorderachse einfacher realisierbar wird; bzw. indem die zur Beabstandung der Elektromaschine eingesetzten mechanischen Komponenten, wie z.B. Wellen, für einen entsprechenden Vierradantrieb durch den Verbrennungsmotor nutzbar gemacht werden. Schließlich bietet die Erfindung bei Hybridfahrzeugen mit heckseitigem Verbrennungsmotor die Option der Rekuperation an der Vorderachse, was sich durch die größere Radlast günstiger darstellt als an der Hinterachse.

Die wenigstens eine Elektromaschine ist an die Vorderachse des Hybridfahrzeugs angebunden. Durch die Wirkverbindung zwischen Vorderachse und Elektromaschine ergibt sich insbesondere der Vorteil, dass eine Rekuperation über die Vorderachse ermöglicht wird, wo die Radlast und damit auch die gewinnbare Energie größer ist als an der Hinterachse. Verbunden damit ist auch eine entsprechende Entlastung der Vorderachs-Bremsen. Zudem ergibt sich eine hervorragende Fahrdynamik, da die Antriebsmomentenverteilung bei höheren Beschleunigungswerten vom Verbrennungsmotor an der Hinterachse dominiert wird, der meist stärker als die Elektromaschine an der Vorderachse dimensioniert ist. Demgegenüber ist beim elektrischen Fahren, d.h. bei eher kleinen Werten der Beschleunigung bzw. der Antriebsmomente, ein Vorderachsantrieb auch unter fahrdynamischen Aspekten vertretbar.

Der Verbrennungsmotor des Hybridfahrzeugs weist zusätzlich noch als zweite Elektromaschine einen Ritzel-, Kurbelwellen- oder riemengetriebenen Starter/Generator auf, zum Motorstart im Stand und während der Fahrt. Diese Ausführungsform ermöglicht bereits volle Hybridfunktionalität über die Vorderachse, insbesondere Rekuperation, Boosten und elektrisches Fahren. Als zusätzlicher Vorteil ermöglicht die Verwendung eines Ritzel-, Kurbelwellen- oder riemengetriebenen Starter/Generators als zweiter Elektromaschine auch einen seriellen Hybridbetrieb.

Ein konventioneller Allradantrieb, d.h. durch den Verbrennungsmotor, ist möglich da der Verbrennungsmotor mechanisch, z.B. durch eine Welle, an der Vorderachse des Hybridfahrzeugs angebunden ist. Dabei kann der konventionelle Allradantrieb durch Vorsehen einer Kupplung auch optional schaltbar sein. Der konventionelle Allradantrieb liefert dabei in bestimmten Betriebsbereichen, wie z.B. Konstantfahrt, einen besseren Wirkungsgrad, als der rein elektrische Antrieb der Vorderachse zusätzlich zum Antrieb der Hinterachse durch den Verbrennungsmotor. Unter Berücksichtigung des Achsgetriebe-Wirkungsgrades kann zur Rekuperation, zum Boosten und zum elektrischen Fahren nun entweder die Vorderachse oder aber sowohl die Hinter- als auch die Vorderachse genutzt werden. Auch hier kann eine einzelne Elektromaschine, entweder parallel zur Vorderachse oder parallel zur Welle zwischen Verbrennungsmotor und Vorderachse, bzw. eine eigene Elektromaschine für jedes Rad der Vorderachse vorgesehen sein.

Für alle beschriebenen Varianten wird mit Vorteil vorgeschlagen, eine zusätzliche Kupplung vorzusehen zwischen einer jeweiligen Elektromaschine und einer angebundenen und sich drehenden Masse, wie z.B. einer Getriebewelle. Hiermit kann einerseits die Leerlaufbestromung der Elektromaschine eingespart werden, die ansonsten zur Überwindung des mechanischen Widerstands bei unbelasteter Elektromaschine nötig wäre. Dazu ist die Abkopplung der unbelasteten Elektromaschine vorgesehen, z.B. dann wenn das Hybridfahrzeug frei rollt ("segelt"). Anderseits ist eine spezielle Abstimmung der Elektromaschine für einen bestimmten Betriebsbereich möglich, z.B. den Bereich niedriger Drehzahlen. Außerhalb dieses Bereichs, z.B. im Bereich höherer Drehzahlen, wäre eine Abkopplung der Elektromaschine vorgesehen, um z.B. das Bersten der Elektromaschine zu vermeiden bzw. Trägheitsmoment im Triebstrang einzusparen. Entsprechend wird eine derartige zusätzliche Kupplung bei Anordnung einer einzelnen Elektromaschine auf der Getriebeeingangswelle bzw. einer mit dem Getriebe verbundenen Welle dann zwischen der Elektromaschine und dem Getriebe vorgesehen. Bei einer eigenen Elektromaschine für jedes Rad der Vorderachse wäre eine derartige zusätzliche Kupplung jeweils zwischen Elektromaschine und Rad vorgesehen. Ein entsprechendes Verfahren würde vorsehen, die zusätzliche Kupplung dann zu öffnen wenn die Elektromaschine nicht mehr belastet wäre bzw. wenn ein bestimmter Betriebsparameter einen vorgebbaren Betriebsbereich verlassen würde. Entsprechend würde die zusätzliche Kupplung dann geschlossen wenn die Elektromaschine wieder belastet wäre bzw. wenn ein bestimmter Betriebsparameter in einen vorgebbaren Betriebsbereich eintreten würde.

Die Erfindung wird nun anhand einer Zeichnung näher beschrieben.

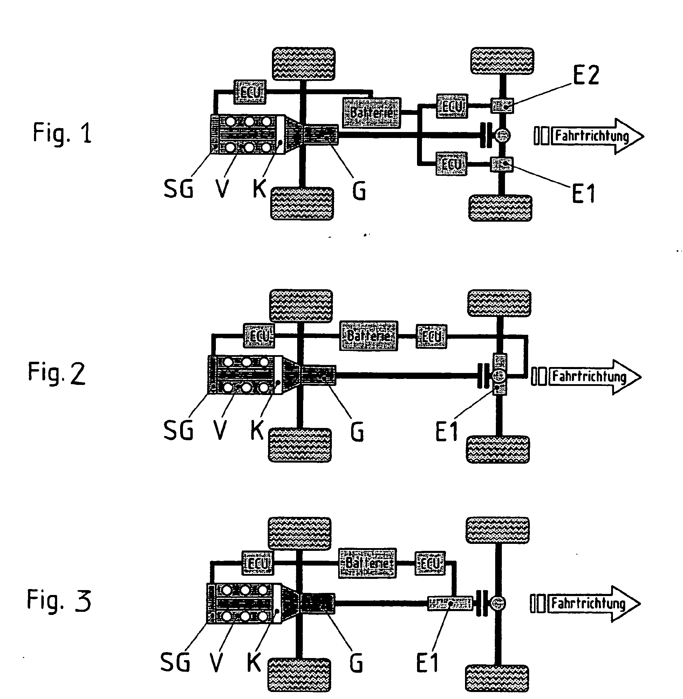

Fig. 1 bis Fig. 3 zeigen jeweils spezielle Gestaltungen der Erfindung, wobei die wenigstens eine Elektromaschine E1, E2 an die Vorderachse angebunden ist. Zum Starten des Verbrennungsmotors V ist bei Fahrzeug-Stillstand und während der Fahrt jeweils ein Starter-Generator SG, als weitere Elektromaschine, vorgesehen, Damit sind wenigstens zwei Elektromaschinen E1, E2, SG vorhanden, womit ein serieller Hybridbetrieb darstellbar ist.

Fig. 1 zeigt eine Gestaltung bei der eine mechanische Verbindung zwischen Hinter- und Vorderachse des Hybridfahrzeugs vorgesehen ist. Damit ist ein konventioneller, das heißt verbrennungsmotorischer, Allradantrieb darstellbar. Für einen optionalen, also schaltbaren, Allradantrieb kann dabei eine Kupplung in der Welle zwischen Vorder- und Hinterachse vorgesehen sein. Eine Lastpunktverschiebung des Verbrennungsmotors V ist über Kardanwelle, Kupplung und Achsgetriebe möglich und unterliegt dem Getriebe/Achsgetriebe-Wirkungsgrad. Boosten, Rekuperieren bzw. elektrisches Fahren ist wahlweise über die Vorderachse oder über Vorder- und Hinterachse möglich, wobei dies dem Achsgetriebe-Wirkungsgrad unterliegt.

Fig. 2 und Fig. 3 zeigen zwei zu Fig. 1 alternative Gestaltungen, die anstatt zweier jeweils lediglich eine Elektromaschine E1 vorsieht. Dies ermöglicht einen einfacheren mechanischen Aufbau, wobei aber die Möglichkeit eines elektrischen "Torque Vectoring" an der Vorderachse entfällt. Während gemäß Fig. 2 eine Anordnung der Elektromaschine E1 auf der Vorderachse und parallel zu dieser vorsieht, ist in Fig. 2 eine Möglichkeit der Anordnung der Elektromaschine E1 an der Welle zwischen Getriebe G und Achsgetriebe der Vorderachse. Hierbei kann wiederum zwischen der Elektromaschine E1 und dem Getriebe G eine Kupplung vorgesehen sein, zur Abkopplung der Elektromaschine E1 zum Einsparen der Leerlaufbestromung und zur besseren Abstimmung für einen bestimmten Betriebsbereich.

## Patentansprüche

1. Hybridfahrzeug mit einem heckseitigen Verbrennungsmotor (V), einem elektrischen Energiespeicher (Batterie), und zumindest einer Elektromaschine (E1, E2) die während einer Rekuperationsphase als Generator zur Aufladung des elektrischen Energiespeichers bzw. während einer Antriebsphase als zumindest zusätzlicher Antrieb zum Verbrennungsmotor vorgesehen ist, wobei der Verbrennungsmotor die Hinterachse des Hybridfahrzeugs antreibt, wobei die oder jede Elektromaschine beabstandet von der Hinterachse im Bereich der Vorderachse vorgesehen ist, wobei die wenigstens eine Elektromaschine an die Vorderachse des Hybridfahrzeugs über ein Achsgetriebe angekoppelt ist, wobei der Verbrennungsmotor mechanisch an die Vorderachse des Hybridfahrzeugs angebunden ist **dadurch gekennzeichnet, daß** der Verbrennungsmotor zusätzlich noch als zweite Elektromaschine (SG) einen Ritzel-, Kurbelwellen- oder riemengetriebenen Starter/Generator aufweist.

2. Hybridfahrzeug nach Anspruch 1, wobei für jedes Rad der Vorderachse eine eigene Elektromaschine vorgesehen ist.

3. Hybridfahrzeug nach Anspruch 1 oder 2, wobei eine zusätzliche Kupplung vorgesehen ist zwischen der oder jeder Elektromaschine und einer angebundenen und sich drehenden Masse.

## Claims

1. Hybrid vehicle having a rear-mounted internal combustion engine (V), an electric energy accumulator (battery), and at least one electric machine (E1, E2) which is provided as a generator for charging the electric energy accumulator during an energy recovery phase and respectively as at least an additional drive to the internal combustion engine during a drive phase, wherein the internal combustion engine drives the rear axle of the hybrid vehicle, wherein the electric machine, or each electric machine is provided at a distance from the rear axle in the region of the front axle, wherein the at least one electric machine is coupled to the front axle of the hybrid vehicle by means of an axle gearing, wherein the internal combustion engine is mechanically connected to the front axle of the hybrid vehicle, **characterized in that** the internal combustion engine additionally has a pinion-driven, crankshaft-driven or belt-driven starter/generator as a second electric machine (SG).

2. Hybrid vehicle according to Claim 1, wherein a separate electric machine is provided for each wheel of the front axle.

3. Hybrid vehicle according to Claim 1 or 2, wherein an additional clutch is provided between the electric machine, or each electric machine, and a connected, rotating mass.

## Revendications

1. Véhicule hybride comprenant un moteur à combustion interne (V) situé du côté arrière, un accumulateur d'énergie (batterie) électrique, et au moins une machine électrique (E1, E2) qui est prévue en tant que générateur pendant une phase de récupération pour la charge de l'accumulateur d'énergie électrique ou en tant qu'entraînement au moins supplémentaire au moteur à combustion interne pendant une phase d'entraînement, le moteur à combustion interne entraînant l'essieu arrière du véhicule hybride, la ou chaque machine électrique étant prévue à distance de l'essieu arrière, dans la région de l'essieu avant, l'au moins une machine électrique étant accouplée à l'essieu avant du véhicule hybride à l'aide d'une transmission d'essieu, le moteur à combustion interne étant raccordé mécaniquement à l'essieu avant du véhicule hybride, **caractérisé en ce que** le moteur à combustion interne comprend en outre, en tant que deuxième machine électrique (SG), un alterno-démarreur entraîné par pignon, vilebrequin ou courroie.

2. Véhicule hybride selon la revendication 1, dans lequel une machine électrique propre est prévue pour chaque roue de l'essieu avant.

3. Véhicule hybride selon la revendication 1 ou 2, dans lequel un accouplement supplémentaire est prévu entre la ou chaque machine électrique et une masse raccordée et en rotation.
